# FASCICULE DE BREVET EUROPEEN

(11) **EP 2 702 523 B1**
(45) Date de publication et mention de la délivrance du brevet: **09.12.2015**
(21) Numéro de dépôt: 12722470.7
(22) Date de dépôt: 25.04.2012
(51) Int. Cl.: G06F 21/35

(54) **MODULE DE GESTION D'UNE TRANSACTION ENTRE UN TERMINAL ET UN DISPOSITIF ELECTRONIQUE**
MODUL ZUR VERWALTUNG EINER TRANSAKTION ZWISCHEN EINEM ENDGERÄT UND EINER ELEKTRONISCHEN VORRICHTUNG
MODULE FOR MANAGING A TRANSACTION BETWEEN A TERMINAL AND AN ELECTRONIC DEVICE

(30) Priorité: 29.04.2011 FR 1153669
(43) Date de publication de la demande: 05.03.2014
(73) Titulaire: Tagattitude, 78150 Rocquencourt (FR)
(72) Inventeur: EONNET, Yves, F-78860 Saint Nom La Breteche (FR)
(74) Mandataire: Delumeau, François Guy
(86) Numéro de dépôt international: PCT/FR2012/050904
(87) Numéro de publication internationale: WO 2012/146871

(56) Documents cités:
- FR-A1- 2 898 238

## Description

### Arrière-plan de l'invention

La présente invention se situe dans le domaine des terminaux de communication, et en particulier dans le domaine des terminaux intelligents autrement connus sous le nom de Smartphone.

Depuis peu, ces terminaux se sont fortement développés, et offrent la possibilité, à leurs utilisateurs, d'y installer de nombreuses applications dites applications résidentes.

Certaines de ces applications peuvent être utilisées pour effectuer une transaction avec l'application résidente d'un autre dispositif électronique.

Dans ce document, on entendra par transaction, tout échange d'informations dans le but d'obtenir un accord entre les applications résidentes de terminaux, sous l'autorité d'un serveur sécurisé, parfois aussi appelé serveur de confiance.

Le frein majeur, dans l'état actuel de la technique, au déploiement de ces transactions entre terminaux est indiscutablement dû au fait qu'il n'existe pas de solution simple pour la mise en place de ces mécanismes de transaction, solution pouvant s'appliquer de la même façon à tout type d'application résidente, quel que soit son contexte.

Par ailleurs, et de façon très dommageable, les solutions connues à ce jour imposent que les deux terminaux parties à la transaction mettent en oeuvre la même application de gestion de la transaction ou du moins une application compatible

L'invention permet de résoudre les inconvénients précités.

### État de la technique antérieure

Le document FR 2 898 238 (2007-09-07) divulgue un procédé utilisant un serveur pour valider une transaction entre deux terminaux mobiles. Un signal S est envoyé par connexion téléphonique du serveur au premier terminal, qui l'émet, à son tour, par son haut-parleur au deuxième terminal mobile, qui est situé à proximité. Le deuxième terminal mobile capture le signal utilisant son microphone, et l'envoie par voie téléphonique au serveur, qui est alors capable de vérifier sa validité, et d'en conclure que les utilisateurs des deux terminaux mobiles sont d'accord pour effectuer la transaction.

### Objet et résumé de l'invention

Plus particulièrement, et selon un premier aspect, l'invention concerne un module de transaction pouvant être intégré dans un terminal pour autoriser une transaction entre une première application résidant dans ce terminal et une deuxième application résidant dans un dispositif électronique, ce module comportant:
- des moyens pour obtenir un code ;
- une interface avec des moyens de communication du terminal permettant l'envoi, à un serveur sécurisé, d'une requête de validation comportant le code ;
- des moyens pour générer un signal audio à partir du code ;
- une interface avec un module du terminal apte à envoyer le signal audio vers un haut-parleur du terminal en vue de sa restitution; et
- des moyens pour autoriser la transaction sur réception d'un message de validation en provenance du serveur sécurisé, ce message étant représentatif de la réception, par le serveur sécurisé, du code en provenance du dispositif électronique.

Ainsi, et d'une façon générale, la transaction entre le terminal et le dispositif électronique est validée par le serveur sécurisé, dès lors qu'il reçoit le même code de chacune de ces entités.

Conformément à l'invention :
- Le code est envoyé par le terminal au serveur sécurisé de façon numérique ;
- Le code est converti en signal audio par le terminal (modulation), émis par le haut-parleur du terminal et capté par le microphone du dispositif électronique ;
- Le code est envoyé par le dispositif électronique au serveur sécurisé, soit en format audio, c'est-à-dire tel que capté par le microphone, soit converti sous forme numérique lorsque le dispositif électronique intègre une fonction de démodulation ou des moyens d'enregistrement.

De façon très avantageuse, la démodulation peut donc être effectuée par le serveur sécurisé. Dans ce mode de réalisation, les seuls moyens nécessaires au dispositif électronique sont le microphone pour capter le signal audio et des moyens de communication avec le serveur sécurisé pour lui transmettre ce signal audio. Par conséquent, le dispositif électronique partie à la transaction peut être un téléphone mobile conventionnel.

Dans un mode de réalisation le terminal comporte des moyens pour générer le code et les moyens d'obtention du module de transaction obtiennent le code à partir de ces moyens de génération.

Dans un mode de réalisation, les moyens d'obtention du module de transaction comportent une interface avec une mémoire constituant un réservoir de codes.

Cette mémoire peut être interne ou externe au terminal. Dans un mode de réalisation, un nombre limité de codes est installé par un serveur dans une mémoire interne du terminal, lui donnant la possibilité de ne réaliser qu'un nombre limité de transactions. Dans un autre mode de réalisation, le terminal accède à des codes générés par un serveur de confiance, sous des conditions déterminées qui ne font pas l'objet de ce brevet.

Dans un mode de réalisation, le module de transaction comporte une interface logicielle avec la première application résidente, l'interface logicielle comportant une fonction utilisée par la première application résidente pour demander l'autorisation de la transaction, et une fonction permettant à la première application résidente de recevoir une valeur représentative de l'autorisation de la transaction par le dispositif électronique et de la validation de cette transaction par le serveur sécurisé.

On considère en effet que le fait que le signal audio ait été reçu par le dispositif électronique est la preuve que l'utilisateur de ce dispositif électronique autorise la transaction, car cela lui impose de positionner son dispositif électronique à une distance très courte du haut-parleur du terminal.

On se place maintenant du point de vue de l'autre partie à la transaction.

Il a déjà été mentionné que le dispositif électronique de cette autre partie pouvait ou non comporter les moyens de démodulation du signal audio capté par son microphone.

Ainsi, et selon un deuxième aspect l'invention concerne un module de transaction pouvant être intégré dans le dispositif électronique pour autoriser une transaction entre une première application résidant dans ce dispositif électronique et une deuxième application résidant dans un terminal, ce module comportant:
- une interface pour recevoir un signal audio capté par un microphone du dispositif électronique, le signal audio ayant été émis par un haut-parleur du terminal;
- des moyens aptes à générer un code à partir du signal audio ; et
- une interface avec des moyens de communication du dispositif électronique permettant l'envoi du code, à un serveur sécurisé, dans le but d'autoriser la transaction.

Et selon un troisième aspect, l'invention concerne un module de transaction pouvant être intégré dans un dispositif électronique pour autoriser une transaction entre une première application résidant dans ce dispositif électronique et une deuxième application résidant dans un terminal, ce module comportant:
- une interface pour recevoir un signal audio capté par un microphone du dispositif électronique, le signal audio ayant été émis par un haut-parleur du terminal;
- des moyens aptes à détecter une première partie du signal audio ; et
- une interface avec des moyens de communication du terminal permettant l'envoi de l'enregistrement d'une deuxième partie du signal audio enregistrée suite à ladite détection, à un serveur sécurisé dans le but d'autoriser la transaction.

Dans un mode de réalisation du module de transaction selon ce deuxième ou se troisième aspect, ce module comporte une interface logicielle avec la première application résidente, l'interface logicielle comportant une fonction utilisée par la première application résidente pour demander au module de transaction d'autoriser la transaction.

L'invention concerne aussi un module de transaction qui incorpore les moyens d'un module de transaction selon le premier aspect et les moyens d'un module de transaction selon le deuxième ou selon le troisième aspect.

### Brève description des dessins

D'autres caractéristiques et avantages de l'invention ressortiront de la description faite ci-dessous en référence aux dessins annexés qui en illustrent un exemple de réalisation dépourvu du tout caractère limitatif.
- La figure 1 représente une transaction entre deux téléphones intelligents incorporant des modules de transaction conformes à un premier mode de réalisation de l'invention ;
- La figure 2 représente une transaction entre un téléphone intelligent de la figure 1 et un téléphone mobile conventionnel ;
- La figure 3 représente une transaction entre deux téléphones intelligents incorporant des modules de transaction conformes à un deuxième mode de réalisation de l'invention ; et
- Les figures 4 et 5 représentent des modules de communication selon deux modes particuliers de réalisation de l'invention.

### Description détaillée d'un premier mode de réalisation de l'invention

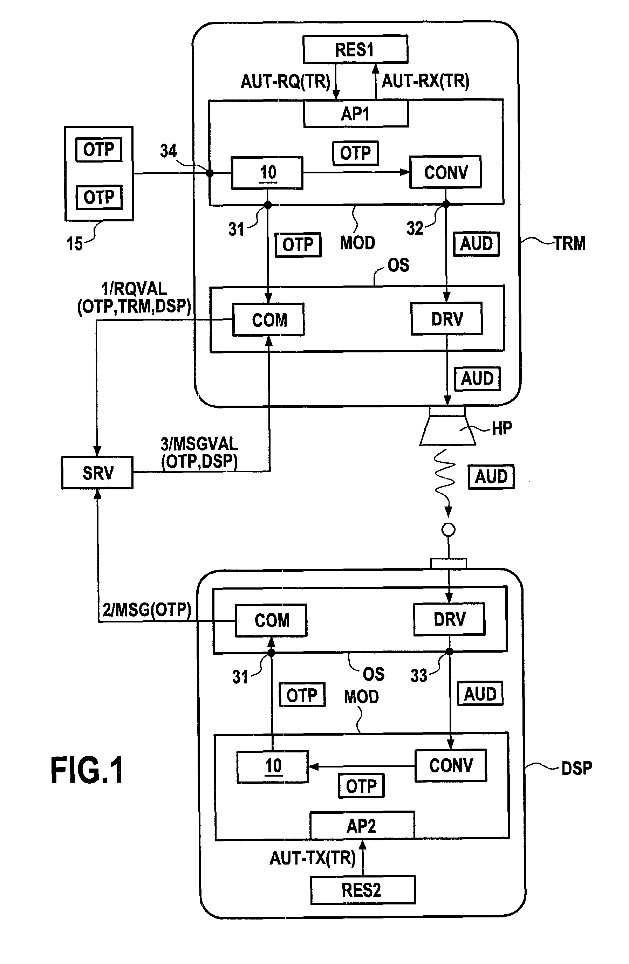

La **figure 1** représente deux téléphones mobiles intelligents TRM, DSP communément appelés Smartphone.

Le téléphone mobile intelligent TRM constitue un terminal au sens de l'invention.

Le téléphone mobile intelligent DSP constitue un dispositif électronique au sens de l'invention.

Chacun de ces téléphones intelligents AQ, DSP comporte un module MOD de transaction conforme à l'invention.

Ce module de transaction MOD s'interface principalement avec une application logicielle RES1, RES2 résidente dans le téléphone intelligent TRM, DSP.

Il s'interface également avec un système d'exploitation OS de ces téléphones intelligents.

Plus précisément, dans l'exemple de réalisation décrit ici, il s'interface avec des moyens COM de communication du téléphone intelligent et avec des pilotes logiciels DRV (driver) aptes à contrôler des périphériques du téléphone intelligent, plus précisément un haut-parleur HP dans le cas du téléphone intelligent TRM et un microphone MIC dans le cas du téléphone intelligent DSP.

Dans le mode de réalisation décrit ici, le module de transaction MOD comporte en outre une interface logicielle permettant aisément au développeur des applications résidentes RES1, RES2 de s'interfacer avec ce module de transaction.

Plus précisément, dans l'exemple de réalisation décrit ici :
- le module de transaction MOD du téléphone intelligent TRM offre une interface logicielle AP1 avec la première application résidente RES1, cette interface comportant deux fonctions AUT_RQ, AUT_RX utilisables par la première fonction résidente RES1, la fonction AUT_RQ pour demander l'autorisation d'une transaction et la fonction AUT_RX pour recevoir, une valeur représentative de l'autorisation de la transaction par le téléphone intelligent DSP et de la validation de cette transaction par un serveur sécurisé SRV ; et
- le module de transaction MOD du téléphone intelligent DSP offre à l'application RES2 résidente une interface logicielle AP2 comportant une fonction AUT_TX utilisée par cette application résidente pour demander au module de transaction MOD d'autoriser la transaction.

Les modules de communication COM compris dans les systèmes d'exploitation OS de chacun des téléphones intelligents TRM, DSP sont aptes à communiquer avec le serveur sécurisé SRV précité.

De façon préférée, les téléphones intelligents TRM, DSP et le serveur de communication sécurisé SRV communiquent via un réseau de télécommunications mobile.

Nous allons maintenant expliquer en détail comment une transaction TR peut être effectuée entre les applications RES1, RES2 résidentes dans les téléphones intelligents TRM et DSP, en coopération avec le serveur sécurisé SRV.

Nous supposerons, dans cet exemple, que le terminal mobile TRM comporte une interface 34 pour obtenir des codes OTP mémorisés dans une unité de stockage 15.

Ces codes sont, dans cet exemple, générés par un serveur de confiance non représenté.

Quoi qu'il en soit, chacun de ces codes est unique. Il peut préférentiellement être conçu pour n'être utilisé qu'une seule fois : on parle alors de code à usage unique ou en anglais « one time password » OTP.

Nous supposerons dans cet exemple que les applications résidentes RES1, RES2 s'apprêtent à réaliser une transaction et ont au préalable établi un dialogue, éventuellement échangé des informations, qui ne font pas partie à proprement parler de l'invention.

Pour demander l'autorisation de la transaction TR, l'application résidente RES1 du téléphone intelligent TRM utilise l'application logicielle AUT_RQ fournie par l'interface de programmation AP1 du module MOD.

Cette fonction déclenche l'obtention, par le module de transaction MOD du téléphone intelligent TRM, d'un code OTP, via l'interface 34, à partir de la mémoire 15.

Ce code OTP est envoyé par les moyens COM de communication du système d'exploitation OS du téléphone intelligent TRM au serveur sécurisé SRV dans une requête de validation RQVAL. Sur la figure 1, on a référencé 31 l'interface entre le module de transaction MOD et ces moyens de communication COM.

Dans le mode de réalisation décrit ici, la requête de validation RQVAL comporte aussi les identifiants TRM, DSP des téléphones intelligents TRM, DSP.

Le module de transaction MOD du téléphone intelligent TRM convertit ensuite le code OTP en un signal audio AUD. Il utilise à cet effet des moyens propres de conversion CONV.

Le module de transaction MOD du téléphone intelligent TRM envoie le signal audio AUD vers un haut-parleur HP de ce téléphone en vue de sa restitution. Sur la figure 1, on a référencé 32 l'interface entre le module de transaction MOD et les pilotes logiciels DRV contrôlant ce haut-parleur.

Pour effectuer la transaction, les téléphones intelligents TRM et DSP doivent être suffisamment proches, et par exemple positionnés "tête-bêche", de sorte que le signal audio AUD, restitué par le haut-parleur HP du téléphone intelligent TRM, soit capté par le microphone MIC du téléphone intelligent DSP.

Lorsque c'est le cas, le pilote logiciel DRV du système d'exploitation OS du téléphone intelligent DSP, en charge du contrôle du microphone, achemine ce signal audio AUD vers le module de transaction MOD de ce téléphone.

Sur la figure 1, on a référencé 33 l'interface entre le module de transaction MOD et les pilotes logiciels DRV contrôlant ce microphone.

Dans le mode de réalisation décrit ici, les moyens de conversion CONV de ce module de transaction MOD convertissent le signal audio AUD pour régénérer le code OTP (démodulation).

On suppose, dans cet exemple, que la fonction résidente RES2 a demandé au module de transaction MOD, via l'interface logicielle AP2, d'autoriser la transaction TR en utilisant l'application AUT_TX.

Par conséquent, le module de transaction MOD du téléphone intelligent DSP, commande, via l'interface 31, l'envoi, au serveur sécurisé SRV d'un message MSG comportant le code OTP obtenu par conversion du signal audio AUD reçu via le canal acoustique établi entre le haut-parleur HP et le microphone MIC.

Le serveur sécurisé SRV est donc en mesure de vérifier que le code OTP reçu du premier téléphone intelligent TRM est identique à celui reçu du deuxième téléphone intelligent DSP, cette identité étant représentative de l'acceptation, par le téléphone intelligent DSP de la transaction proposée par le téléphone intelligent TRM.

Par conséquent, le serveur sécurisé SRV envoie un message MSGVAL de validation au téléphone intelligent TRM.

Dans le mode de réalisation décrit ici, ce message de validation MSGVAL comporte le code OTP et l'identité DSP du téléphone intelligent DSP.

Ce message est reçu par le module de transaction MOD du téléphone intelligent TRM via l'interface 31. La fonction AUT_RX accessible via l'interface logicielle AP1 du module de transaction MOD retourne alors à la fonction résidente RES1 une valeur représentative de l'autorisation de la transaction TR par le téléphone intelligent DSP et de la validation de cette transaction par le serveur sécurisé SRV.

### Description détaillée d'un deuxième mode de réalisation de l'invention

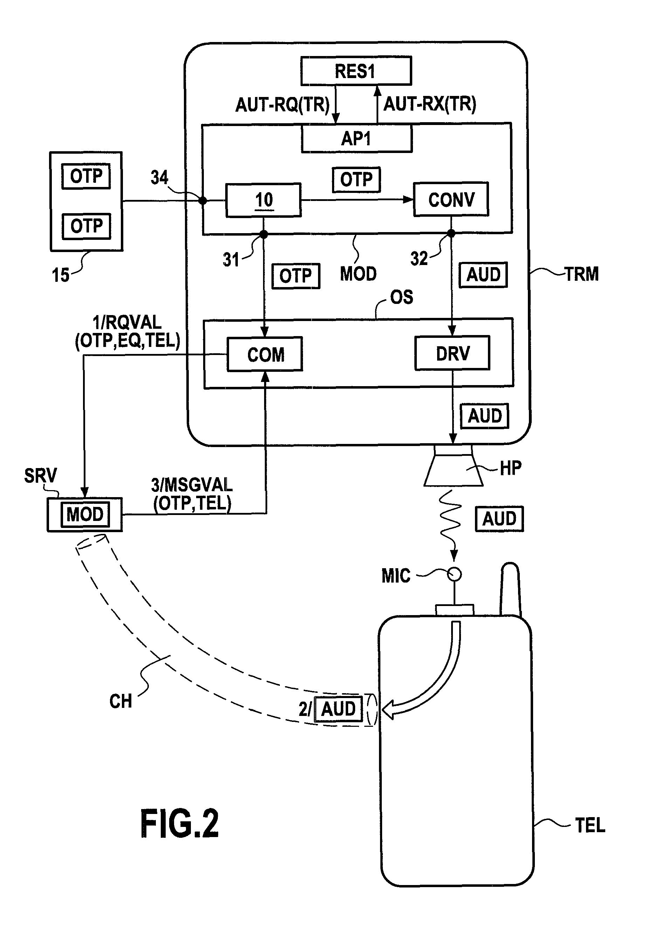

La **figure 2** représente un téléphone mobile intelligent TRM et un téléphone mobile classique TEL conforme au standard GSM.

Le téléphone mobile intelligent TRM décrit en référence à cette figure est identique à celui décrit en référence à la figure 1.

Le téléphone mobile TEL ne comporte pas de module de transaction MOD conforme à l'invention.

Dans ce deuxième mode de réalisation, le module de transaction MOD conforme à l'invention est compris dans le serveur sécurisé SRV.

Dans ce deuxième mode de réalisation, lorsque le serveur SRV reçoit la requête de validation RQVAL comportant un code OTP du téléphone intelligent TRM et le numéro du téléphone classique TEL, il établit un canal CH de communication GSM avec le téléphone classique TEL.

Ce canal de communication permet au serveur sécurisé SRV de recevoir le signal audio AUD capté par le microphone MIC du téléphone classique TEL.

Dans le mode de réalisation décrit ici, le module de transaction MOD du serveur sécurisé convertit le signal audio AUD pour générer le code OTP.

Le serveur sécurisé SRV est donc en mesure de vérifier que le code OTP reçu, du téléphone TEL, sous forme audio AUD, par le canal GSM CH correspond à celui reçu du téléphone intelligent TRM dans la requête de validation RQV.

Cette correspondance traduit le fait que les téléphones TEL et TRM ont été rapprochés l'un de l'autre, preuve de l'acceptation, par l'utilisateur du téléphone classique TEL de la transaction proposée par le téléphone intelligent TRM.

### Description détaillée d'un troisième mode de réalisation de l'invention

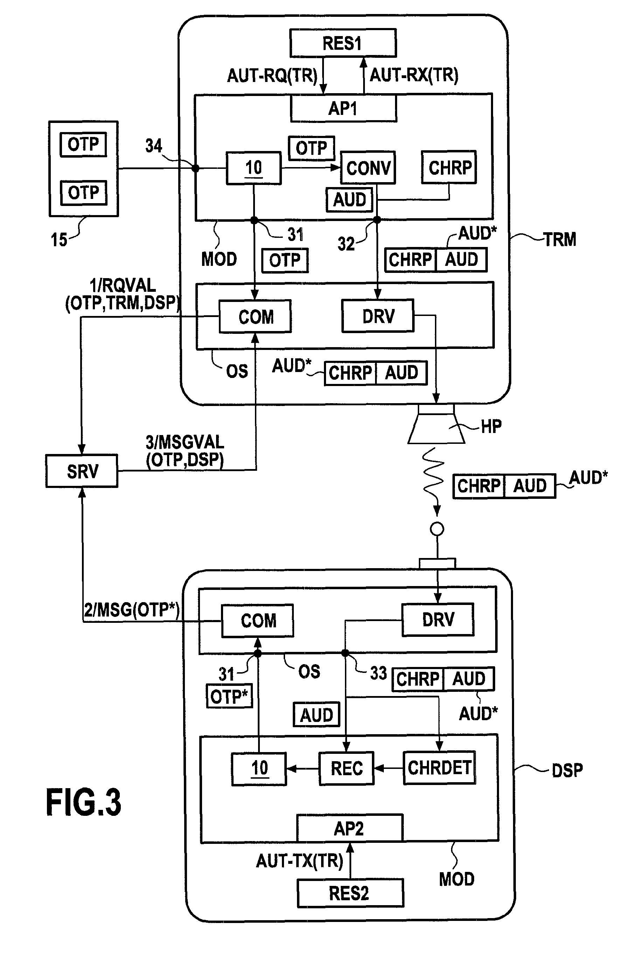

La **figure 3** représente deux téléphones mobiles intelligents TRM, DSP conformes à un autre mode de réalisation de l'invention.

Le téléphone mobile intelligent TRM diffère de celui décrit à la figure 1 en ce que son module de transaction MOD génère un signal audio complexe AUD* constitué par une première partie de signal audio CHRP et par une deuxième partie de signal audio AUD.

La première partie CHRP est un signal audio prédéterminé, très facilement reconnaissable.

La deuxième partie AUD correspond à la conversion du code OTP, comme dans l'exemple de la figure 1.

Le téléphone intelligent DSP diffère de celui de la figure 1 en ce que son module de transaction comporte une unité de détection CHRDET apte à détecter la première partie de signal audio CHRP lorsqu'un signal audio complexe AUD* est capté par le microphone MIC.

Lorsque cette détection est effectuée, l'unité de détection CHRDET commande des moyens REC d'enregistrement du module de transaction MOD pour qu'ils enregistrent la deuxième partie AUD du signal AUD*, l'enregistrement, noté OTP*, étant communiqué au serveur sécurisé SRV pour validation de la transaction.

Le serveur sécurisé SRV est donc en mesure de vérifier que le code OTP reçu du premier téléphone intelligent TRM correspond à l'enregistrement OTP* reçu du deuxième téléphone intelligent DSP, cette correspondance étant représentative de l'acceptation, par le téléphone intelligent DSP de la transaction proposée par le téléphone intelligent TRM.

L'invention peut être utilisée pour tout type de transaction, l'interface du module de transaction MOD avec les applications résidentes RES1, RES2 étant générique.

Dans les modes de réalisation décrits aux figures 1 à 3, nous avons séparé les fonctions de demande d'autorisation de transaction (rôle du terminal TRM) et d'autorisation de transaction (rôle du dispositif électronique DSP).

Bien entendu, en pratique, les modules de transaction MOD peuvent permettre de jouer les deux rôles.

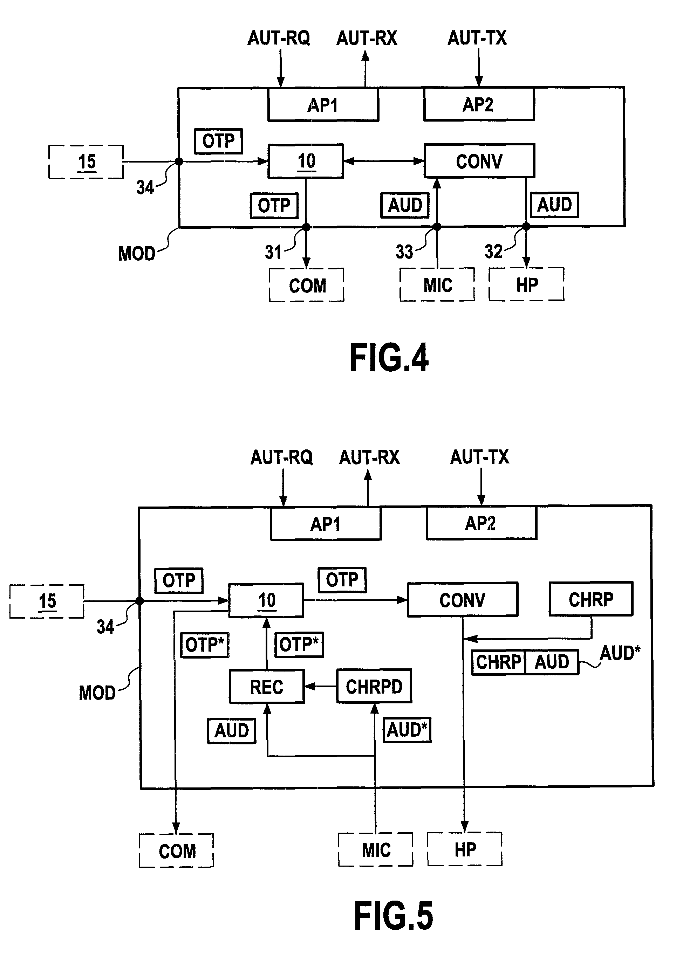

La **figure 4** représente, à cet effet, un module de transaction dans un premier mode préféré de réalisation de l'invention.

Ce module de transaction comporte, dans cet exemple une interface 31 avec des moyens de communication d'un dispositif électronique ou d'un terminal, des moyens 33 pour s'interfacer avec un microphone, des moyens 32 pour s'interfacer avec un haut-parleur, des moyens de conversion d'un signal audio en un code OTP, et vice-versa, une interface 34 pour recevoir un code OTP, et des interfaces logiciels AP1, AP2 avec les applications résidentes dans le dispositif électronique ou le terminal.

La **figure 5** représente un module de transaction dans un deuxième mode préféré de réalisation de l'invention.

Ce module de transaction diffère de celui de la figure 4 en ce que le module de conversion CONV n'assure que la partie modulation mais pas la conversion du signal audio reçu par le microphone MIC en code OTP. Il comporte des moyens CHRDET pour détecter la première partie du signal audio et des moyens REC d'enregistrement de la deuxième partie du signal audio, cet enregistrement étant envoyé au serveur sécurisé par le dispositif électronique DSP qui l'incorpore avec lequel il communique via l'interface 31.

Dans la description faite précédemment, les données échangées entre le terminal TRM et le serveur SRV était constituées par le code OTP et les identifiants DSP, TRM.

Seul le code OTP est absolument indispensable. Dans certaines applications, les identifiants TRM et/ou DSP pourraient ne pas être communiqués.

En fonction de l'application choisie, d'autres types de données peuvent être véhiculées et notamment des montants de transaction, des droits, des codes d'accès, des mots de passe, des clés cryptographiques, ou de façon plus générale tout paramètre utile à la transaction envisagée.

Dans un mode de réalisation, le serveur SRV maintient une base de données dans laquelle il enregistre les identifiants des équipements qui incorporent un module de transaction MOD au sens de l'invention. Cela permet au serveur d'établir spontanément un canal CH de communication GSM avec le dispositif électronique DSP, comme dans l'exemple de la figure 2, lorsque ce dispositif électronique ne comporte pas de module MOD.

On notera que le module de transaction MOD peut être incorporé dans des terminaux ou dispositifs électroniques de tout type : terminaux de communication mobiles, caisse enregistreuse, distributeur de billet de banque, borne fixe, carte à puce, carte SIM, ...

Le module de transaction MOD peut aussi être intégré dans une serrure, la transaction entre la serrure et le dispositif électronique DSP étant dans ce cas une demande d'ouverture de porte soumise à validation du serveur sécurisé SRV.

## Revendications

1. Module de transaction (MOD) pouvant être intégré dans un terminal (TRM) pour autoriser une transaction entre une première application (RES1) résidant dans ce terminal (TRM) et une deuxième application (RES2) résidant dans un dispositif électronique (DSP), ce module (MOD) comportant:
- des moyens (10) pour obtenir un code (OTP) ;
- une interface (31) avec des moyens (COM) de communication dudit terminal (TRM) permettant l'envoi, à un serveur sécurisé (SRV), d'une requête de validation (RQVAL) comportant ledit code (OTP) ;
- des moyens (CONV) pour générer un signal audio (AUD) à partir dudit code (OTP);
- une interface (32) avec un module (DRV) dudit terminal (TRM) apte à envoyer ledit signal audio (AUD) vers un haut-parleur (HP) dudit terminal (TRM) en vue de sa restitution; et
- des moyens (10) pour autoriser ladite transaction (TR) sur réception d'un message de validation (MSGVAL) en provenance dudit serveur sécurisé (SRV), ce message étant représentatif de la réception, par ledit serveur sécurisé, dudit code (OTP) en provenance dudit dispositif électronique (DSP).

2. Module de transaction selon la revendication 1 **caractérisé en ce que** lesdits moyens (10) d'obtention comportent une interface (34) avec une mémoire (15) constituant un réservoir de codes (OTP).

3. Module de transaction selon la revendication 1 ou 2 **caractérisé en ce qu'**il comporte une interface logicielle (AP1) avec ladite première application résidente (RES1), ladite interface logicielle comportant une fonction (AUT_RQ) utilisée par ladite première application résidente (RES1) pour demander l'autorisation de ladite transaction (TR), et une fonction (AUT_RX) permettant à ladite première application résidente (RES1) pour recevoir une valeur représentative de l'autorisation de la transaction par le dispositif électronique et de la de validation de la transaction par ledit module (MOD).

4. Module (MOD) comportant les moyens d'un module de transaction selon l'une quelconque des revendications 1 à 3, ledit module étant en outre apte à autoriser une deuxième transaction entre une troisième application (RES2) résidant dans ce dispositif électronique (DSP) et une quatrième application (RES1) résidant dans un deuxième terminal (TRM), ce module (MOD) comportant:
- une interface (33) pour recevoir un signal audio (AUD) capté par un microphone (MIC) dudit dispositif électronique (DSP), le signal audio ayant été émis par un haut-parleur (HP) dudit deuxième terminal;
- des moyens (CONV) aptes à générer un code (OTP) à partir dudit signal audio (AUD) ; et
- une interface (31) avec des moyens (COM) de communication du dispositif électronique (DSP) permettant l'envoi dudit code (OTP) à un serveur sécurisé (SRV) dans le but d'autoriser ladite deuxième transaction.

5. Module (MOD) comportant les moyens d'un module de transaction selon l'une quelconque des revendications 1 à 3, ledit module étant en outre apte à autoriser une deuxième transaction entre une troisième application (RES2) résidant dans ce dispositif électronique (DSP) et une quatrième application (RES1) résidant dans un deuxième terminal (TRM), ce module (MOD) comportant:
- une interface (33) pour recevoir un signal audio (AUD*) capté par un microphone (MIC) dudit dispositif électronique (DSP), le signal audio ayant été émis par un haut-parleur (HP) dudit deuxième terminal;
- des moyens (CHRDET) aptes à détecter une première partie (CHRP) dudit signal audio (AUD*) ; et
- une interface (31) avec des moyens (COM) de communication du dispositif électronique (DSP) permettant l'envoi de l'enregistrement (OTP*) d'une deuxième partie (AUD) dudit signal audio (AUD*) à un serveur sécurisé (SRV) dans le but d'autoriser ladite deuxième transaction.

6. Module de transaction selon la revendication 4 ou 5, caractérisé en qu'il comporte une interface logicielle (AP2) avec ladite troisième application résidente (RES2), ladite interface logicielle (AP2) comportant une fonction (AUT_TX) utilisée par ladite troisième application résidente (RES2) pour demander audit module de transaction (MOD) d'autoriser ladite deuxième transaction (TR).

## Patentansprüche

1. Transaktionsmodul (MOD), das in ein Endgerät (TRM) integriert werden kann, um eine Transaktion zwischen einer in diesem Endgerät (TRM) residenten ersten Applikation (RES1) und einer in einer elektronischen Vorrichtung (DSP) residenten zweiten Applikation (RES2) zuzulassen, wobei dieses Modul (MOD) umfasst:
- Mittel (10) zum Erhalten eines Codes (OTP),
- eine Schnittstelle (31) mit Kommunikationsmitteln (COM) des Endgerätes (TRM), die das Senden einer den Code (OTP) umfassenden Validierungsanfrage (RQVAL) an einen gesicherten Server (SRV) ermöglichen,
- Mittel (CONV) zum Generieren eines Tonsignals (AUD) anhand des Codes (OTP),
- eine Schnittstelle (32) mit einem Modul (DRV) des Endgerätes (TRM), das geeignet ist, das Tonsignal (AUD) zwecks seiner Wiedergabe zu einem Lautsprecher (HP) des Endgerätes (TRM) zu senden, und
- Mittel (10) zum Zulassen der Transaktion (TR) bei Empfang einer Validierungsnachricht (MSGVAL) von dem gesicherten Server (SRV), wobei diese Nachricht für den Empfang des von der elektronischen Vorrichtung (DSP) stammenden Codes (OTP) durch den gesicherten Server repräsentativ ist.

2. Transaktionsmodul nach Anspruch 1, **dadurch gekennzeichnet, dass** die Erhaltungsmittel (10) eine Schnittstelle (34) mit einem Speicher (15), der einen Speicher von Codes (OTP) bildet, umfassen.

3. Transaktionsmodul nach Anspruch 1 oder 2, **dadurch gekennzeichnet, dass** es eine Softwareschnittstelle (AP1) mit der ersten residenten Applikation (RES1) umfasst, wobei die Softwareschnittstelle eine Funktion (AUT_RQ), die durch die erste residente Applikation (RES1) verwendet wird, um die Zulassung der Transaktion (TR) anzufordern, sowie eine Funktion (AUT_RX) umfasst, die der ersten residenten Applikation (RES1) ermöglicht, einen für die Zulassung der Transaktion durch die elektronische Vorrichtung und für die Validierung der Transaktion durch das Modul (MOD) repräsentativen Wert zu empfangen.

4. Modul (MOD), umfassend die Mittel eines Transaktionsmoduls nach einem der Ansprüche 1 bis 3, wobei das Modul ferner geeignet ist, eine zweite Transaktion zwischen einer in dieser elektronischen Vorrichtung (DSP) residenten dritten Applikation (RES2) und einer in einem zweiten Endgerät (TRM) residenten vierten Applikation (RES1) zuzulassen, wobei dieses Modul (MOD) umfasst:
- eine Schnittstelle (33) zum Empfangen eines Tonsignals (AUD), das durch ein Mikrofon (MIC) der elektronischen Vorrichtung (DSP) erfasst wird, wobei das Tonsignal durch einen Lautsprecher (HP) des zweiten Endgerätes ausgesandt worden ist,
- Mittel (CONV), die geeignet sind, einen Code (OTP) anhand des Tonsignals (AUD) zu generieren, und
- eine Schnittstelle (31) mit Kommunikationsmitteln (COM) der elektronischen Vorrichtung (DSP), die das Senden des Codes (OTP) an einen gesicherten Server (SRV) mit dem Ziel der Zulassung der zweiten Transaktion ermöglichen.

5. Modul (MOD), umfassend die Mittel eines Transaktionsmoduls nach einem der Ansprüche 1 bis 3, wobei das Modul ferner geeignet ist, eine zweite Transaktion zwischen einer in dieser elektronischen Vorrichtung (DSP) residenten dritten Applikation (RES2) und einer in einem zweiten Endgerät (TRM) residenten vierten Applikation (RES1) zuzulassen, wobei dieses Modul (MOD) umfasst:
- eine Schnittstelle (33) zum Empfangen eines Tonsignals (AUD*), das durch ein Mikrofon (MIC) der elektronischen Vorrichtung (DSP) erfasst wird, wobei das Tonsignal durch einen Lautsprecher (HP) des zweiten Endgerätes ausgesandt worden ist,
- Mittel (CHRDET), die geeignet sind, einen ersten Teil (CHRP) des Tonsignals (AUD*) zu erfassen, und
- eine Schnittstelle (31) mit Kommunikationsmitteln (COM) der elektronischen Vorrichtung (DSP), die das Senden der Aufnahme (OTP*) eines zweiten Teils (AUD) des Tonsignals (AUD*) an einen gesicherten Server (SRV) mit dem Ziel der Zulassung der zweiten Transaktion ermöglichen.

6. Transaktionsmodul nach Anspruch 4 oder 5, **dadurch gekennzeichnet, dass** es eine Softwareschnittstelle (AP2) mit der dritten residenten Applikation (RES2) umfasst, wobei die Softwareschnittstelle (AP2) eine Funktion (AUT_TX) umfasst, die durch die dritte residente Applikation (RES2) verwendet wird, um bei dem Transaktionsmodul (MOD) die Zulassung der zweiten Transaktion (TR) anzufordern.

## Claims

1. A transaction module (MOD) suitable for incorporating in a terminal (TRM) for authorizing a transaction between a first application (RES1) resident in the terminal (TRM) and a second application (RES2) resident in an electronic device (DSP), the module (MOD) comprising:
· code-obtaining means (10) for obtaining a code (OTP);
· an interface (31) with the communications means (COM) of said terminal (TRM) enabling a validation request (RQVAL) including said code (OTP) to be sent to a secure server (SRV);
· means (CONV) for generating an audio signal (AUD) from said code (OTP);
· an interface (32) with a module (DRV) of said terminal (TRM) suitable for sending said audio signal (AUD) to a loudspeaker (HP) of said terminal (TRM) in order to play it back; and
· means (10) for authorizing said transaction (TR) on receiving a validation message (MSGVAL) from said secure server (SRV), the message being representative of said secure server receiving said code (OTP) from said electronic device (DSP).

2. A transaction module according to claim 1, **characterized in that** said obtaining means (10) include an interface (34) with a memory (15) constituting a reservoir of codes (OTP).

3. A transaction module according to claim 1 or claim 2, **characterized in that** it includes a software interface (AP1) with said first resident application (RES1), said software interface including a function (AUT_RQ) used by said first resident application (RES1) for requesting authorization of said transaction (TR), and a function (AUT_RX) enabling said first resident application (RES1) to receive a value representative of the authorization of the transaction by the electronic device and of the validation of the transaction by said module (MOD).

4. Module (MOD) comprising the means of a transaction module according to any one of claims 1 to 3, said module being also suitable for authorizing a second transaction between a third application (RES2) resident in the electronic device (DSP) and a fourth application (RES1) resident in a second terminal (TRM), the module (MOD) comprising:
· an interface (33) for receiving an audio signal (AUD) picked up by a microphone (MIC) of said electronic device (DSP), the audio signal having being sounded by a loudspeaker (HP) of said second terminal;
· means (CONV) suitable for generating a code (OTP) from said audio signal (AUD); and
· an interface (31) with communications means (COM) of the electronic device (DSP) for enabling said code (OTP) to be sent to a secure server (SRV) for the purpose of having said second transaction authorized.

5. Module (MOD) comprising the means of a transaction module according to any one of claims 1 to 3, said module being also suitable for authorizing a second transaction between a third application (RES2) resident in the electronic device (DSP) and a fourth application (RES1) resident in a second terminal (TRM), the module (MOD) comprising:
· an interface (33) for receiving an audio signal (AUD*) picked up by a microphone (MIC) of said electronic device (DSP), the audio signal being sounded by a loudspeaker (HP) of said second terminal;
· means (CHRDET) suitable for detecting a first portion (CHRP) of said audio signal (AUD*); and
· an interface (31) with communications means (COM) of the electronic device (DSP) for enabling the recording (OTP*) of a second portion (AUD) of said audio signal (AUD*) to be sent to a secure server (SRV) for the purpose of having said second transaction authorized.

6. A transaction module according to claim 4 or claim 5, **characterized in that** it includes a software interface (AP2) with said third resident application (RES2), said software interface (AP2) including a function (AUT_TX) used by the third resident application (RES2) for requesting said second transaction module (MOD) to authorize said transaction (TR).
